# EUROPEAN PATENT SPECIFICATION

(11) **EP 2 975 963 B1**
(45) Date of publication and mention of the grant of the patent: **23.05.2018**
(21) Application number: 14723510.5
(22) Date of filing: 10.03.2014
(51) Int. Cl.: A43C 3/00, B29C 45/14

(54) **FOOTWEAR VAMP AND PROCESS FOR THE PRODUCTION OF VAMPS FOR FOOTWEAR**
SCHUHOBERLEDER UND VERFAHREN ZUR HERSTELLUNG DES SCHUHOBERLEDERS
CLAQUE DE CHAUSSURE ET PROCÉDÉ DE PRODUCTION DE CLAQUES POUR CHAUSSURES

(30) Priority: 18.03.2013 IT FI20130054
(43) Date of publication of application: 27.01.2016
(73) Proprietor: 10 Ottobre S.r.l., 53049 Torrita di Siena (SI) (IT)
(72) Inventor: SPINELLI, Andrea, 52100 Arezzo (IT)
(74) Representative: Mincone, Antimo
(86) International application number: PCT/IT2014/000070
(87) International publication number: WO 2014/147652

(56) References cited:
- IT-B1- 1 395 831
- IT-B1- 1 395 832
- US-A1- 2010 291 394

## Description

The present invention relates to a footwear vamp and a process for the production of vamps for footwear. It is known that, especially in so-called "technical" footwear, such as hiking or trekking shoes and boots use is made of hooks in which the strings pass. The application of the hooks on the vamps generally implies the execution of holes and/or seams that compromise the impermeability of the upper and oblige to adopt particular technical remedies for limiting their negative effects, without, however, avoiding higher production costs.

A known technique, disclosed in the Italian patent no. 1395831, foresees the realization of shoe vamps with a plurality of hooks applied on an upper side of a vamp, and to form, in correspondence of each hook, a seal that engages the upper face of the base of each hook, crosses it and joins with the top side of the vamp.

The main purpose of the present invention is to eliminate, or at least greatly reduce, the drawbacks related to the application of the hooks by means of drilling and/or stitching and to offer an alternative to the technique disclosed in the Italian patent no. 1395831.

This result is achieved, according to the present invention, by adopting the idea of making a shoe vamp and providing a method having the characteristics indicated in the independent claims. Other features of the present invention are the subject of the dependent claims.

Thanks to the present invention, it is possible to produce footwear, in particular technical footwear of the type mentioned above, without compromising the impermeability of the vamp due to the application of the hooks, and this without appreciable increases in the production cost. Furthermore, in a shoe made in accordance with the present invention the hooks are anchored to the upper in a stable and durable way. In addition, the implementation of a proceeding in accordance with the present invention allows the production of vamps with seals which reveal the shape of the hooks if desired.

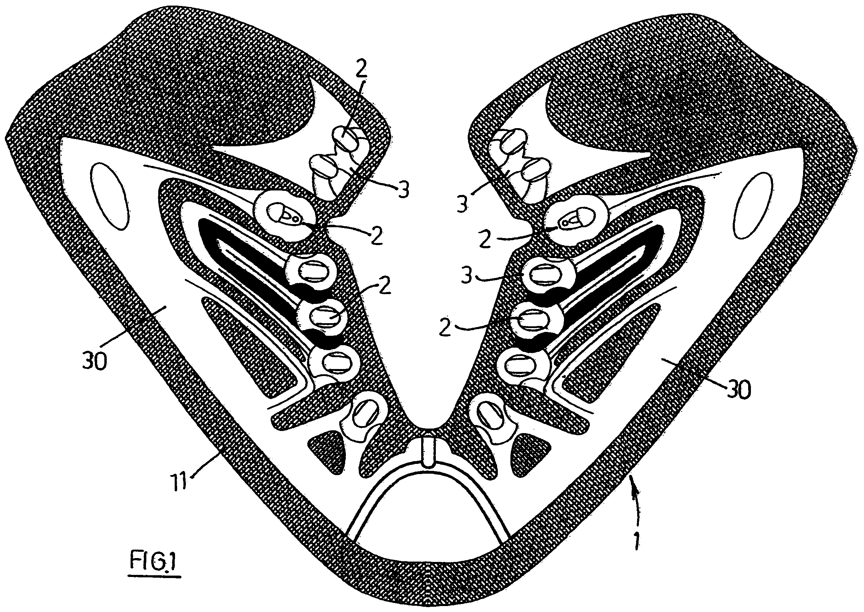

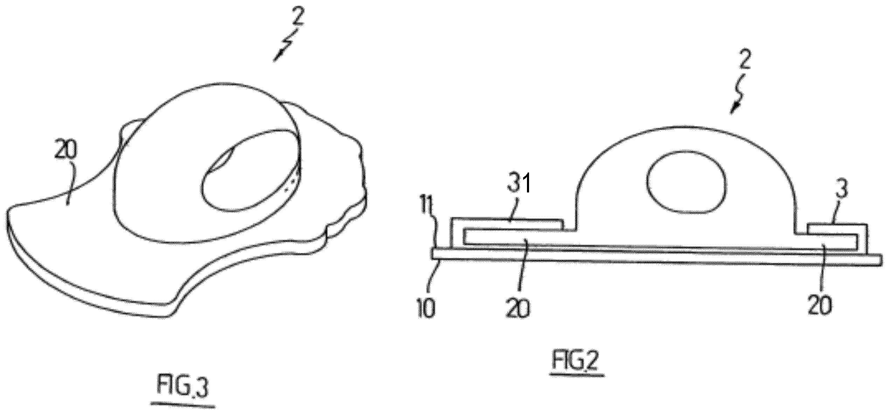

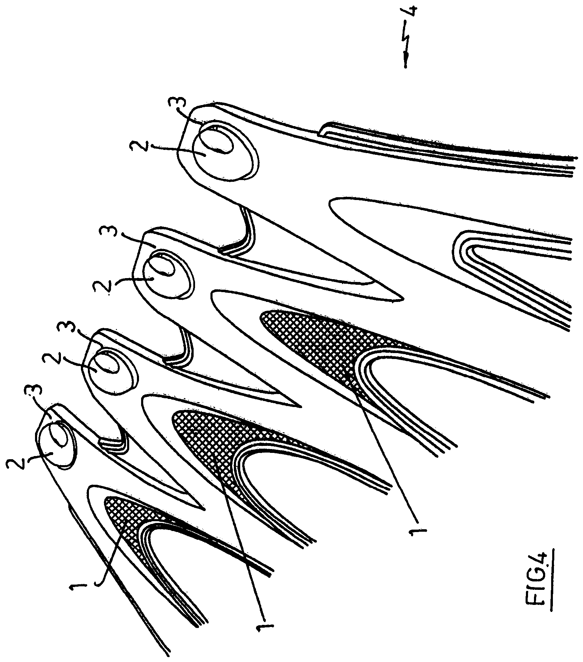

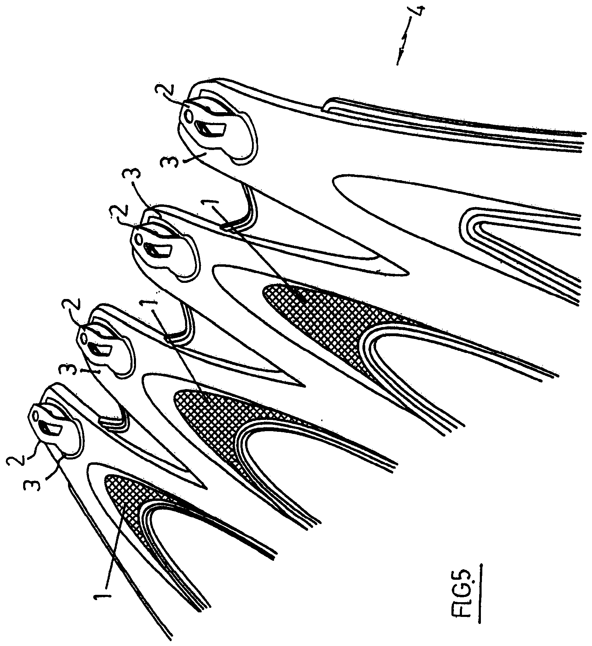

These and other advantages and features of the present invention will be best understood by anyone skilled in the art thanks to the following description and the accompanying drawings, given by way of example but not to be considered in a limiting sense, in which:
▪ Fig.1 is a schematic view from the above of a shoe vamp according to the present invention;
▪ Fig.2 is a schematic section view of the vamp shown in Fig.1 along a longitudinal direction of a hook;
▪ Fig.3 shows a hook for footwear that can be used for making the vamp shown in Fig.1;
▪ Figs. 4 and 5 show further embodiments of the present invention.

Reduced to its essential structure and with reference to the figures of the attached drawings, a vamp for footwear (1) in accordance with the present invention has a lower side (10) and an upper side (11). The lower side (10) is intended to be inside the shoe when the vamp is joined to the sole (not visible in the drawings). The upper side (11) that, when the vamp (1) is joined to the sole, is on the outside, is provided with a plurality of hooks for footwear (2). These can be of the closed mouth type, as shown in the attached drawings, or of the open mouth type.

According to the present invention, the hooks (2) are anchored to the upper side (11) of the vamp by means of seals (3) that engage the base (20) of the hooks.

Said seals are formed by hot injection of plastic material in a mold (not shown in the drawings) provided with seats for positioning the hooks (2) on the vamp (1) and imprints that give a desired shape to the same seals (3).

More particularly, the hooks (2) are also made of plastic material, whose melting point is equal to or substantially equal to the melting point of the material of the seals (3) injected into the mold, so that the heat of the plastic material forming the seals (3) determines its fusion with the material of the hooks (2). In other words, when the material of the seals (3) is injected into the mold, as a result of its temperature there is a fusion of the material of the hooks (2) in areas of contact with the injected material of the seals (for example, in the area of the bases 20), such that the hooks (2) and seals (3) form a single body at the end of the solidification process of the said injected material. And, since the seals (3) join to the upper side (11) of the vamp, there is the perfect anchorage of the hooks (2) to the vamp itself.

In the example shown in the drawings, the material of the seals (3) surrounds and completely envelops the bases (20) of the hooks (2), forming an edge (31) which overhangs the edge of the said bases (20). The seals (3) can be shaped to perform also a decorative or ornamental function and a protective function in respect of the vamp (1).

During the step of forming the seals (3) that determine the anchorage of the hooks (2) to the vamp (1), further seals (30) can be formed having a decorative or protective function only as said above.

For example, the material used to make both the hooks (2) that the seals (3, 30) can be polyurethane. Again for example, the material can be ELASTOLLAN ® - TPU ether / ester Thermoplastic Polyurethane produced by BASF. The injection temperature of the material forming the seals (3) can be comprised, for example, between 190 °C and 235 °C.

It goes without saying, however, that the material used to realize the said seals (3, 30) can be of any other nature and composition provided that it is suitable for the molding of the same on the upper (1) and provided that it has a melting point comparable to that of the material of which the hooks (2) are made, or a melting temperature not lower than the melting temperature of the material used to make the hooks (2). Similarly, the material of the upper (1) can be of any type on which can be formed seals of plastic material by molding.

The material of the sales (3) can be transparent such that the hooks (2) can be seen through the same seals.

From the above it is evident that the application of the hooks on the vamp (1) does not foresee any drilling or stitching involving the vamp (1).

With reference to the example shown in Figs. 4 and 5 of the attached drawings, the invention is implemented by providing an element (4) with a plurality of hooks (2) anchored - as previously described - to a substrate (1) to constitute a portion of vamp to be applied subsequently on another portion of the vamp (for example by stitching).

In practice, the details of execution may vary in any equivalent way as for what concerns the shape, size and arrangement of the individual elements described and illustrated, without thereby departing from the scope of the adopted solution and thus remaining within the limits of protection granted by this patent.

## Claims

1. Proceeding for manufacturing shoe vamps with a plurality of footwear hooks (2) applied on an upper side (11) of a vamp or vamp portion (1;4) comprising a step of forming, in correspondence of each hook (2), a seal (3) which engages each hook (2) and joins with the upper side (11) of the vamp or vamp portion (1;4), wherein said seals (3) are made by plastic material injection into a mould equipped with seats into which the hooks (2) are positioned before carrying out the said injection, **characterized in that** the said hooks (2) are made of plastic material having a melting point not higher than the melting point of the plastic material of the seals (3), so that the seals (3) join to the hooks (2) by melting of the plastic material of which the same hooks are made by effect of said injection.

2. Proceeding according to claim 1, wherein each hook has a base part (20), **characterized in that** the seals (3) surround and wrap the base parts (20) of the hooks (2).

3. Proceeding according to claim 1 **characterized in that** during the moulding phase of the seals (3) determining the anchorage of the hooks (2) to the vamp (1), further seals (30) are formed having decorative or protective function with regard to the vamp or vamp portion (1;4).

4. Proceeding according to claim 1 **characterized in that** a same plastic material is used for making the seals (3;30) and the hooks (2).

5. Proceeding according to claim 1 **characterized in that** a same plastic material is used for making the seals (3;30) and the hooks (2) is polyurethane.

6. Shoe vamp with a plurality of footwear hooks (2), each of said hooks (2) featuring a base part (20) destined to be fixed to an upper side (11) of the vamp or vamp portion (1;4), wherein said base parts (20) are anchored to the vamp or vamp portion (1; 4) by means of seals (3) each of which engages each hook (2) and joins with the upper side (11) of the vamp or vamp portion (1;4), **characterized in that** the said hooks (2) are made of plastic material having a melting point not higher than the melting point of the plastic material of the seals (3).

7. Shoe vamp according to claim 6 **characterized in that** the seals (3) surround and wrap the base parts (20) of the hooks (2).

8. Shoe vamp according to claim 6 **characterized in that** the said hooks (2) are of the open mouthed or close mouthed type.

9. Shoe vamp according to claim 6 **characterized in that** the seals (3;30) and the hooks (2) are made of a same plastic material.

10. Shoe vamp according to claim 6 **characterized in that** the seals (3;30) and the hooks (2) are made of polyurethane.

## Patentansprüche

1. Verfahren zur Herstellung eines Schuh-Oberleders mit einer Vielzahl von an der Oberseite (11) eines Oberleders oder eines Oberleder-Teils (1; 4) angebrachten Schuh-Häkchen (2), wobei das Verfahren folgende Schritte umfasst: Formen eines Verbindungselementes (3) im Bereich eines jeden Häkchens (2), wobei das Verbindungselement (3) mit jedem Häkchen (2) in Eingriff steht und sich mit der Oberseite (11) des Schuh-Oberleders oder Oberleder-Teils (1; 4) verbindet, wobei besagte Verbindungselemente (3) durch Kunststoff-Injektion in eine Form hergestellt werden, die mit Sitzen ausgestattet ist, in welchen die Häkchen (2) positioniert werden, bevor die Injektion durchgeführt wird, **dadurch gekennzeichnet, dass** die Häkchen (2) aus einem Kunststoffmaterial hergestellt sind, das einen Schmelzpunkt besitzt, der nicht höher als der des Kunststoffmaterials der Verbindungselemente (3) ist, sodass sich die Verbindungselemente (3) dadurch mit den Häkchen (2) verbinden, dass durch die Injektion das Kunststoffmaterial geschmolzen wird, aus dem die Häkchen hergestellt sind.

2. Verfahren nach Anspruch 1, bei welchem jedes Häkchen eine Basis (20) besitzt, **dadurch gekennzeichnet, dass** die Verbindungselemente (3) die Basis (20) der Häkchen (2) umgeben und umhüllen.

3. Verfahren nach Anspruch 1, **dadurch gekennzeichnet, dass** während der Formungsphase der Verbindungselemente (3), welche die Verankerung der Häkchen (2) am Oberleder (1) bewirkt, weitere Verbindungselemente (30) ausgebildet werden, die bezüglich des Oberleders oder des Oberleder-Teils (1; 4) eine Zier- oder Schutzfunktion besitzen.

4. Verfahren nach Anspruch 1, **dadurch gekennzeichnet, dass** das gleiche Kunststoffmaterial für die Herstellung sowohl der Verbindungselemente (3; 30) als auch der Häkchen (2) verwendet wird.

5. Verfahren nach Anspruch 1, **dadurch gekennzeichnet, dass** das gleiche Kunststoffmaterial, das für die Herstellung sowohl der Verbindungselemente (3; 30) als auch der Häkchen (2) verwendet wird, Polyurethan ist.

6. Schuh-Oberleder mit einer Vielzahl von Schuh-Häkchen (2), die eine Basis (20) besitzen, die dazu dient, an einer Oberseite (11) des Schuh-Oberleders oder Oberleder-Teils (1; 4) befestigt zu werden, wobei die Basis (20) am Oberleder oder Oberleder-Teil (1; 4) mithilfe von Verbindungselementen (3) verankert wird, von denen jedes mit jedem Häkchen (2) in Eingriff steht und sich mit der Oberseite (11) des Oberleders oder des Oberleder-Teils (1; 4) verbindet, **dadurch gekennzeichnet, dass** die Häkchen (2) aus einem Kunststoffmaterial hergestellt sind, das einen Schmelzpunkt besitzt, der nicht höher liegt als der Schmelzpunkt des Kunststoffmaterials der Verbindungselemente (3).

7. Schuh-Oberleder nach Anspruch 6, **dadurch gekennzeichnet, dass** die Verbindungselemente (3) die Basis (20) eines jeden Häkchens (2) umgeben und umhüllen.

8. Schuh-Oberleder nach Anspruch 6, **dadurch gekennzeichnet, dass** die Häkchen (2) offen oder ösenförmig geschlossen sind.

9. Schuh-Oberleder nach Anspruch 6, **dadurch gekennzeichnet, dass** die Verbindungselemente (3; 30) und die Häkchen (2) aus dem gleichen Kunststoffmaterial hergestellt sind.

10. Schuh-Oberleder nach Anspruch 6, **dadurch gekennzeichnet, dass** die Verbindungselemente (3; 30) und die Häkchen (2) aus Polyurethan hergestellt sind.

## Revendications

1. Procédés pour fabriquer des claques de chaussure avec une pluralité de crochets de chaussure (2) appliqués sur un côté supérieur (11) d'une claque ou partie de claque (1; 4) comprenant une étape de formation, en correspondance de chaque crochet (2), d'un joint (3) qui vient en prise avec chaque crochet (2) et se joint au côté supérieur (11) de la claque ou partie de claque (1; 4), les joints (3) étant réalisés par injection de matière plastique dans un moule équipé avec des sièges dans lesquels les crochets (2) sont positionnés avant d'effectuer ladite injection, **caractérisé en ce que** lesdits crochets (2) sont en matière plastique ayant un point de fusion non supérieur au point de fusion de la matière plastique des joints (3), de sorte que les joints (3) se joignent aux crochets (2) par fusion de la matière plastique dont les mêmes crochets sont réalisés par effet de ladite injection.

2. Procédé selon la revendication 1, dans lequel chaque crochet a une partie de base (20), **caractérisé en ce que** les joints (3) entourent et enveloppent les parties de base (20) des crochets (2).

3. Procédé selon la revendication 1, **caractérisé en ce que** pendant la phase de moulage des joints (3) déterminant l'ancrage des crochets (2) sur la claque (1), d'autres joints (30) ont une fonction décorative ou protectrice par rapport à la claque ou à la partie de claque (1; 4).

4. Procédé selon la revendication 1, **caractérisé en ce qu'**une même matière plastique est utilisée pour fabriquer les joints (3; 30) et les crochets (2).

5. Procédé selon la revendication 1, **caractérisé en ce qu'**une même matière plastique est utilisée pour fabriquer les joints (3; 30) et les crochets (2) étant polyuréthane.

6. Claque de chaussure avec une pluralité de crochets de chaussure (2), chacun desdits crochets (2) comportant une partie de base (20) destinée à être fixée à un côté supérieur (11) de la claque ou partie de claque (1; 4), dans laquelle lesdites parties de base (20) sont ancrées à la claque ou partie de claque (1; 4) au moyen de joints (3) qui viennent en contact avec chaque crochet (2) et se raccordent au côté supérieur (11) de la claque ou partie de claque (1; 4), **caractérisée en ce que** lesdits crochets (2) sont en matière plastique ayant un point de fusion non supérieur du point de fusion de la matière plastique des joints (3).

7. Claque de chaussure selon la revendication 6, **caractérisée en ce que** les joints (3) entourent et enveloppent les parties de base (20) des crochets (2).

8. Claque de chaussure selon la revendication 6, **caractérisé en ce que** lesdits crochets (2) sont du type à embouchure ouverte ou à embouchure fermée.

9. Claque de chaussure selon la revendication 6, **caractérisé en ce que** les joints (3; 30) et les crochets (2) sont faits d'une même matière plastique.

10. Claque de chaussure selon la revendication 6, **caractérisé en ce que** les joints (3; 30) et les crochets (2) sont en polyuréthane.
